# EUROPÄISCHE PATENTSCHRIFT

(11) **EP 1 826 888 B1**
(45) Veröffentlichungstag und Bekanntmachung des Hinweises auf die Patenterteilung: **15.05.2013**
(21) Anmeldenummer: 07000147.4
(22) Anmeldetag: 04.01.2007
(51) Int. Cl.: H02K 11/04, H02K 9/22, H02K 7/14, B63H 20/00, B63H 21/17

(54) **Elektrischer Außenbordmotor mit Außenläufermotor und integriertem, elektronischem Umrichter**
Electrical outboard motor with external rotor motor and integrated electronic converter
Moteur hors-bord électrique avec moteur à induit extérieur et convertisseur électronique intégré

(30) Priorität: 20.01.2006 DE 102006003027; 31.03.2006 EP 06006818
(43) Veröffentlichungstag der Anmeldung: 29.08.2007
(73) Patentinhaber: Torqeedo GmbH, 82205 Gilching (DE)
(72) Erfinder: Böbel, Friedrich, Dr., 82547 Eurasburg (DE)
(74) Vertreter: Gellner, Bernd

(56) Entgegenhaltungen:
- EP-A- 1 523 087
- WO-A-00/47464
- WO-A-2004/112220
- DE-B- 1 100 493
- US-A- 4 559 016
- US-A- 6 104 112

## Beschreibung

Die Erfindung betrifft einen Außenbordantrieb mit einer Unterwassergondel, welche einen Trägerkörper umfasst, wobei der Trägerkörper mit einer Öffnung versehen ist, durch die eine Welle verläuft, wobei die Welle mit einem in der Unterwassergondel angeordneten Elektromotor verbunden ist, wobei der Elektromotor von einem Umrichter elektronisch angesteuert wird und wobei der Umrichter in der Unterwassergondel untergebracht ist.

Es ist bereits bekannt, den Elektromotor eines Elektro-Außenbordmotors in der Unterwassergondel des Außenbordantriebs unterzubringen. Mit Unterwassergondel wird im Folgenden der unten am Schaft eines Außenbordantriebs befindliche Unterwasserteil verstanden. Insbesondere die bisher häufig als Bootsantrieb eingesetzten Asynchronmotoren sind relativ unempfindlich gegen Feuchtigkeit, so dass bei einem Wassereinbruch in die Unterwassergondel nicht sofort der Motor zerstört wird.

Aus dem Dokument WO 00/47464 A1, das als nächstligender Stand der Technik angeschen wird, ist ein Außenbordantrieb bekannt, der sämtliche Merkmale der Präambel des unabhängigen Anspruchs 1 aufweist.

Elektronisch kommutierte, Permanentmagnet erregte Synchronmotoren sind aufgrund ihres hohen Drehmoments für den Antrieb von Bootspropellern besonders geeignet. In solchen Motoren werden hohe Magnetfelddichten von etwa 1 T/cm² erzeugt. Auch Synchronmotoren werden teilweise in der Unterwassergondel vorgesehen.

Das für den Lauf eines Synchronmotors notwendige Wechselfeld wird über eine elektronische Schaltung, im Folgenden als Umrichter bezeichnet, gesteuert. Der Umrichter eines elektronisch kommutierten, Permanentmagnet erregten Synchronmotors wird bisher nicht in der Unterwassergondel angeordnet, da aufgrund der beengten Platzverhältnisse und der dadurch bedingten unmittelbaren Nähe von Elektromotor und Umrichter befürchtet wurde, dass die hohen Magnetfelddichten die Steuerelektronik des Umrichters stören würde.

Zudem ist die Elektronik des Umrichters empfindlich gegen Wasser und würde bei einem Wassereinbruch in die Unterwassergondel schnell zerstört werden. Als Schutz gegen Feuchtigkeit und Wasser wird der Umrichter häufig in Kunstharz eingegossen und so gegen äußere Einflüsse abgekapselt. Eingegossene Umrichter können jedoch nicht in der Unterwassergondel untergebracht werden, da hierfür das Platzangebot meist nicht ausreicht.

Aufgabe vorliegender Erfindung ist es, einen Außenbordantrieb der eingangs genannten Art zu verbessern.

Diese Aufgabe wird durch einen Außenbordantrieb mit einer Unterwassergondel gelöst, wobei die Unterwassergondel einen gut wärmeleitenden Trägerkörper umfasst, wobei der Trägerkörper mit einer Öffnung versehen ist, durch die eine Welle verläuft, wobei die Welle mit einem in der Unterwassergondel angeordneten Elektromotor verbunden ist, wobei der Elektromotor von einem Umrichter elektronisch angesteuert wird, wobei der Elektromotor als Außenläufer ausgeführt ist und der Umrichter in thermischem Kontakt mit dem Trägerkörper steht.

Die Verbindungsleitungen zwischen dem Umrichter und dem Elektromotor wirken als Antennen. Insbesondere bei Hochleistungsmotoren fließen hohe Ströme von teilweise mehr als 80 A. Werden diese Ströme von dem Umrichter schnell geschaltet, so müssen über die Verbindungsleitungen zwischen dem Umrichter und dem Elektromotor hohe steilflankige Ströme übertragen werden, die elektromagnetische Störungen hervorrufen.

Erfindungsgemäß werden nun der Elektromotor und der Umrichter in der Unterwassergondel des Außenbordantriebs untergebracht. Auf diese Weise werden die Verbindungsleitungen zwischen diesen sehr kurz gehalten. Die elektromagnetischen Störungen, die ansonsten bei solchen hohen steilflankigen Strömen hervorgerufen werden, werden dadurch vermieden.

Der Elektromotor ist erfindungsgemäß als Außenläufer ausgeführt. Dies bedeutet, dass der Stator im Zentrum angeordnet ist und sich der Rotor außen um den Stator dreht. Die Drehachse des Rotors befindet sich im Zentrum des Stators und fällt mit der Symmetrieachse des Stators zusammen. Die Pole des Rotors sind also weiter von der Drehachse des Rotors beabstandet als die Pole des Stators. Der Rotor kann ring- oder glockenförmig gestaltet sein.

Das zwischen den Polen des Stators und den Polen des Rotors erzeugte Magnetfeld ist im Wesentlichen radial zu der Drehachse des Rotors nach außen gerichtet. Die elektromagnetische Kraft wird in dem Spalt zwischen den innen liegenden Statorpolen und den außen auf dem ring- oder glockenförmigen Rotor liegenden Rotorpolen erzeugt, das heißt, weit von der Drehachse des Rotors entfernt, so dass sehr hohe Drehmomente erreicht werden.

Im Vergleich zu einem Innenläufer, bei dem sich der Rotor im Inneren des Stators dreht, hat der Außenläufer damit den Vorteil, dass aufgrund des größeren Abstandes der Permanentmagnete des Rotors von der Drehachse bei gleicher vom Statordrehfeld auf den Rotor ausgeübter Kraft ein höheres Drehmoment erzeugt wird.

Der Außenläufer befindet sich erfindungsgemäß in der Unterwassergondel. Das in dem Elektromotor erzeugte Magnetfeld ist, wie oben ausgeführt, radial nach außen gerichtet. Die Außenwände bzw. das Gehäuse der Unterwassergondel können daher nicht aus Metall gefertigt sein, da ansonsten in den Außenwänden Wirbelströme hervorgerufen würden. Bei Außenläufern besteht das Gehäuse der Unterwassergondel deshalb meist aus Kunststoff. Kunststoff besitzt aber eine relativ geringe Wärmeleitfähigkeit, wodurch die Wärmeabfuhr über die Außenwände der Unterwassergondel schlecht wird.

Erfindungsgemäß ist daher ein gut wärmeleitender Trägerkörper vorgesehen, welcher mit einer Öffnung für die Antriebswelle des Elektromotors versehen ist. Die Öffnung kann beispielsweise in Form einer Bohrung, eines Einschnitts oder einer Einbuchtung in den Trägerkörper vorliegen. Trägerkörper und Elektromotor sind in axialer Richtung, d.h. in Längsrichtung der Antriebswelle, versetzt zueinander angeordnet. Das in dem Elektromotor erzeugte Magnetfeld ist dagegen radial gerichtet. Das bedeutet, dass sich der Trägerkörper im Wesentlichen außerhalb des Magnetfeldes befindet, so dass im Trägerkörper keine Wirbelströme hervorgerufen werden.

Der Trägerkörper besteht aus einem gut wärmeleitenden Material, insbesondere aus Metall. Der Umrichter wird so angeordnet, dass er in gutem thermischen Kontakt mit dem Trägerkörper steht. Ein guter thermischer Kontakt bedeutet, dass die beim Betrieb des Umrichters entstehende Verlustwärme im Wesentlichen an den Trägerkörper abgegeben und über diesen effektiv an das die Unterwassergondel umgebende Wasser weitergeleitet wird, so dass keine Gefahr einer Überhitzung des Elektromotors besteht. Es ist daher keine separate Luftkühlung, z.B. mittels eines Ventilators, notwendig. Außerdem befindet sich der Umrichter bei der erfindungsgemäßen Anordnung außerhalb des Magnetfeldes, wodurch elektromagnetische Störungen des Umrichters ausgeschlossen werden.

Durch die erfindungsgemäß kurzen Verbindungsleitungen werden zudem deren Induktivität und deren Innenwiderstand minimiert. Dies trägt weiter dazu bei, die elektrischen Verluste zu minimieren.

Die erfindungsgemäße Anordnung von Elektromotor und Umrichter in der Unterwassergondel ist insbesondere bei Elektromotoren, vor allem elektronisch kommutierten Synchronmotoren, von Vorteil, bei denen hohe Ströme fließen, insbesondere wenn Ströme von mehr als 20 A, bevorzugt mehr als 50 A, besonders bevorzugt mehr als 80 A fließen. Beim Schalten solch hoher Ströme können in den Verbindungsleitungen elektromagnetische Störungen hervorgerufen werden, die durch die erfindungsgemäß kurzen Leitungswege vermieden werden.

Äußere Form und Größe der Unterwassergondel sind nach strömungstechnischen Gesichtspunkten ausgelegt. Elektromotor und Umrichter müssen daher so ausgeführt sein, dass sie in die vorgegebene Form der Unterwassergondel passen und möglichst einfach zu montieren sind. Dies wird durch den erfindungsgemäßen Trägerkörper erreicht, welcher mit einer Bohrung oder Öffnung versehen ist, durch den die einen Propeller tragende Welle gesteckt ist. An der Welle ist der Elektromotor angeschlossen. Der Umrichter weist vorzugsweise eine zentrale Bohrung auf und wird ebenfalls auf die Welle gesteckt. Auf diese Weise ergibt sich eine kompakte und leicht montierbare Einheit.

Aus Herstellungs- und Servicegründen ist es besonders günstig, wenn in diesem Fall ein Deckel oder ein Gehäuse vorgesehen ist, welches über den Elektromotor und den Umrichter gestülpt und mit dem Trägerkörper wasserdicht verbunden ist. Der Deckel bildet hierbei die oder einen Teil der äußeren Form der Unterwassergondel. Bevorzugt ist der Deckel auf den Trägerkörper aufgeschraubt. Durch einfaches Abschrauben des Deckels von dem Trägerkörper sind so der Elektromotor und der Umrichter für Service-und Reparaturzwecke zugänglich.

Im Hinblick auf die Abdichtung gegen Wasser hat sich auch eine Klebeverbindung zwischen Deckel und Trägerkörper bewährt. Durch geeignete Wahl des Klebestoffes lässt sich die Klebeverbindung beispielsweise unter dem Einfluss von Wärme auch wieder lösen, wenn dies aus Reparaturgründen erforderlich sein sollte.

Auf der entgegengesetzten Seite des Trägerkörpers kann entweder unmittelbar der Propeller auf die Welle gesteckt sein oder ein Getriebe dazwischen geschaltet sein. In letzterem Fall ist von Vorteil ein weiterer Deckel vorgesehen, der von der Getriebeseite auf den Trägerkörper aufgeschraubt oder mit diesem anderweitig verbunden ist. Dieser Deckel besitzt dann einen Durchlass für die Welle.

Erfindungsgemäß ist es vorgesehen den Umrichter und den Elektromotor auf verschiedenen Seiten des Trägerkörpers anzuordnen. Auch bei dieser Anordnung ist es von Vorteil, zwei Deckel oder Gehäuse vorzusehen, die von beiden Seiten mit dem Trägerkörper wasserdicht verbunden, insbesondere verklebt oder verschraubt, werden und die den Elektromotor, den Umrichter und gegebenenfalls weitere Elemente, zum Beispiel ein Getriebe, aufnehmen.

Die Deckel oder Gehäuseteile, welche die äußere Begrenzung der Unterwassergondel bilden, sind vorzugsweise aus Kunststoff gefertigt. Insbesondere der Deckel bzw. das Gehäuseteil, welches den Elektromotor umgibt und im Einflussbereich des Magnetfeldes steht, besteht aus einem elektrisch nicht leitenden Material. Es hat sich aber auch bewährt, die anderen Gehäuseteile der Unterwassergondel, abgesehen von dem Trägerkörper, aus Kunststoff zu fertigen, um Gewicht zu sparen.

Die Montage der Unterwassergondel stellt sich damit äußerst einfach dar: Zunächst wird durch die vorzugsweise zentrale Bohrung des Trägerkörpers die Antriebswelle geschoben. Umrichter und, falls notwendig oder gewünscht, ein Getriebe werden auf derselben Seite oder auf den beiden entgegengesetzten Seiten des Trägerkörpers auf die Welle gesteckt. Als nächstes wird der Elektromotor auf der Welle angebracht. Schließlich werden der oder die Deckel über die Einheit gestülpt und mit dem Trägerkörper verbunden. Damit ist die Unterwassergondel montiert und der Propeller kann an der Welle befestigt werden.

Aus Montagegründen hat es sich außerdem bewährt, den Umrichter zunächst auf eine Metallplatte zu montieren und die Metallplatte dann in thermischen Kontakt mit dem Trägerkörper zu bringen. Der Umrichter mit Metallplatte ist einfacher zu handhaben.

Bevorzugt werden die elektronischen Schaltelemente des Umrichters, in denen eine große Verlustwärme entsteht, in flächigen Kontakt mit dem Trägerkörper gebracht. Der Umrichter weist dazu vorzugsweise eine Leiterplatte auf, wobei die Schaltelemente auf einer Seite der Leiterplatte angeordnet sind. Diese Seite der Leiterplatte wird, gegebenenfalls mit einer Zwischenlage aus einer Wärmeleitungsfolie, direkt an dem Trägerkörper befestigt.

Es ist auch möglich, die Leistungsbauelemente, welche den größten Beitrag zu der entstehenden Verlustwärme leisten, auf einer Leiterplatte zusammenzufassen, die in wärmeleitenden Kontakt mit dem Trägerkörper gebracht wird. Die der Steuerung dienenden Bauelemente, welche nur geringe Ströme schalten, können auf einer separaten Leiterplatte angeordnet werden, die nicht unbedingt mit dem Trägerkörper in wärmeleitendem Kontakt stehen muss, da kaum Verlustwärme entsteht.

Die Figuren zeigen bevorzugte Ausführungsformen der Erfindung. Hierbei zeigen
- Figur 1: eine Anordnung von Umrichter und Elektromotor in der Unterwassergondel
- Figur 2: eine Ausführung der Erfindung,
- Figur 3: eine Detailansicht von Figur 1,
- Figur 4: eine andere Ausführungsform der erfindungsgemäßen Unterwassergondel,
- Figur 5: die Unterwassergondel von Figur 4 ohne die Deckel und
- Figur 6: einen Umrichter, wie er in der Erfindung eingesetzt wird.

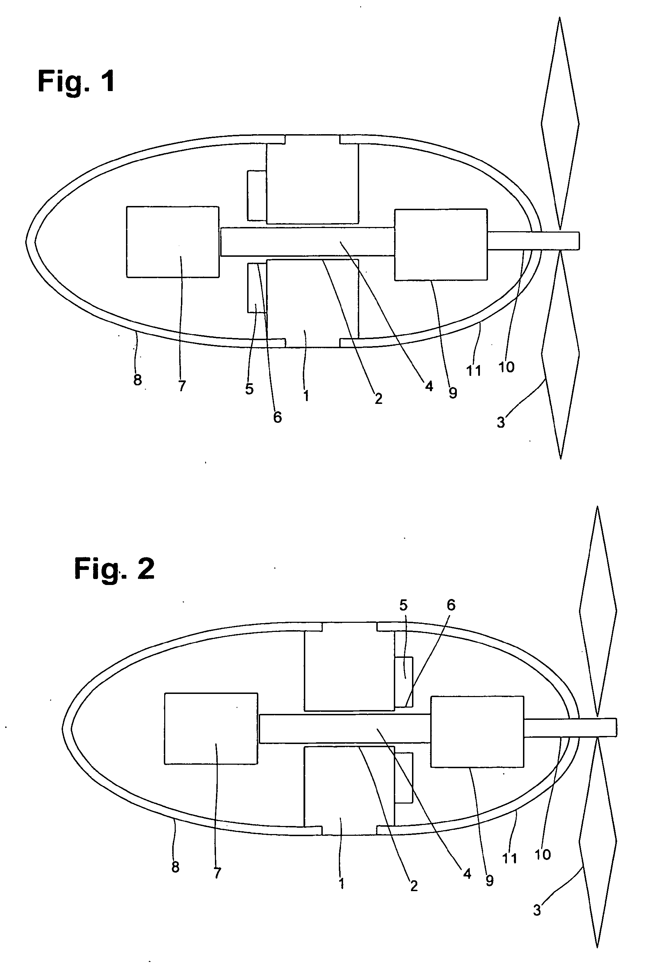

Die Ausführungen gemäß den Figuren 1, 3 und 5 sind nicht Teil der Erfindung, sondern sollen lediglich das Verständnis der Erfindung erleichtern.

Der Außenbordantrieb besitzt eine Unterwassergondel , welche einen Trägerkörper 1 umfasst. Der Trägerkörper 1 ist mit einer zentralen Bohrung 2 zur Durchführung der einen Propeller 3 tragenden Welle 4 versehen. Ein Umrichter 5 ist ebenfalls mit einer zentralen Bohrung 6 versehen und wird auf die Welle 4 gesteckt, so dass dieser dem Trägerkörper 1 benachbart angeordnet ist. Anschließend wird ein als Synchronmotor ausgeführter Elektromotor 7 auf die Welle 4 gesetzt und elektrisch mit dem Umrichter 5 verbunden. Über den Elektromotor 7 und den Umrichter 5 wird ein Deckel 8 gestülpt und mit dem Trägerkörper 1 wasserdicht verbunden.

Auf der anderen Seite des Trägerkörpers 1 wird ein Getriebe 9 mit der Welle 4 verbunden. Das Getriebe 9 übersetzt die Drehzahl der Welle 4 und treibt eine Propellerwelle 10 an, an der Propeller 3 befestigt ist. Das Getriebe 9 wird mittels eines Deckels 11 wasserdicht abgedeckt. Der Deckel 11 weist eine gegen Wasser abgedichtete Durchführung für die Welle 4 auf.

Zur Befestigung der beiden Deckel 8, 11 an dem Trägerkörper 1 besitzt der Trägerkörper 1 zwei Gewinde, auf die die Deckel 8, 11 aufgeschraubt werden. Die äußere Form der Unterwassergondel wird damit durch die Deckel 8, 11 und den Umfang des Trägers 1 vorgegeben.

Figur 2 zeigt eine erfindungsgemäße Ausführung, wobei sich der Umrichter 5 und der Elektromotor 7 auf entgegengesetzten Seiten des Trägers 1 befinden. Ansonsten ist der Außenbordantrieb analog zu dem gemäß Figur 1 aufgebaut.

In beiden Ausführungsformen sind Umrichter und Elektromotor in die Unterwassergondel integriert, um die elektrischen Verbindungsleitungen zwischen diesen möglichst kurz zu halten und eine möglichst effektive Kühlung des Elektromotors zu erzielen.

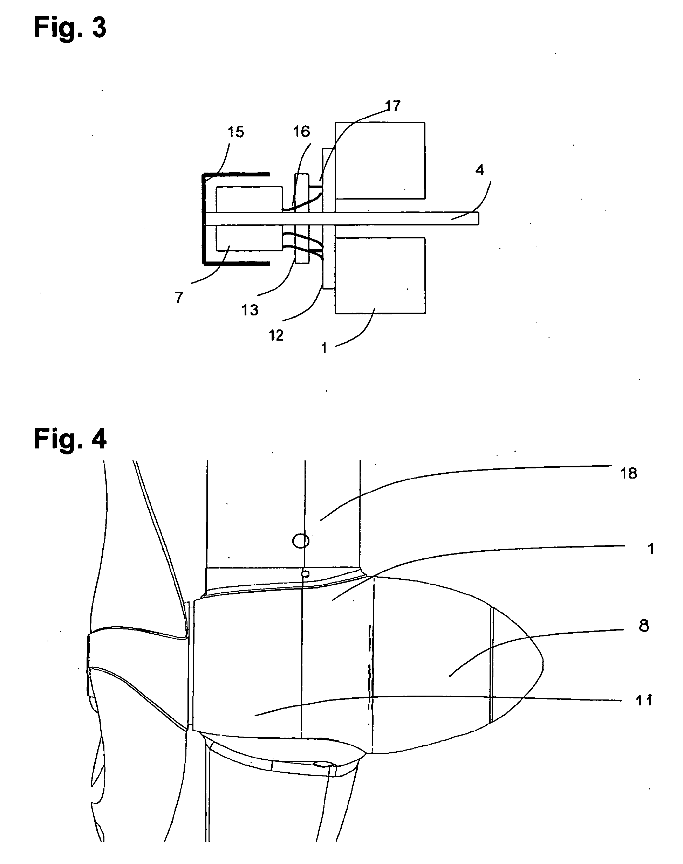

Figur 3 zeigt eine Detailansicht von Figur 1. Der Umrichter 5 besitzt eine Platine 12 mit den Leistungskomponenten der elektronischen Umrichterschaltung und eine Platine 13 mit der Steuereinheit. Die Leistungsplatine 12 trägt die Steuerplatine 13 mittels geeigneter Tragelemente 14.

Der Synchronmotor 7 ist als Außenläufer ausgeführt und besitzt eine außen laufende Glocke 15, an deren Innenseite die rotierenden Permanentmagneten angebracht sind. Mit der Glocke 15 ist die Antriebswelle 4 verbunden, die sich, wie oben beschrieben, durch den Trägerkörper 1 bis zum Propeller erstreckt. Der Synchronmotor 7 ist über äußerst kurze Anschlussleitungen 16 an den Umrichter 5, bzw. die Leistungsplatine 12, angeschlossen.

In den Figuren 4 bis 6 ist eine andere Ausführungsform dargestellt. Gleiche Bauteile sind in allen Figuren mit denselben Bezugszeichen versehen.

Am Schaft 18 des Außenbordantriebs befindet sich die Unterwassergondel. Die Außenhülle der Unterwassergondel 8 wird durch die beiden Gehäusedeckel 8, 11 und die Außenseite des Trägerkörpers 1 gebildet.

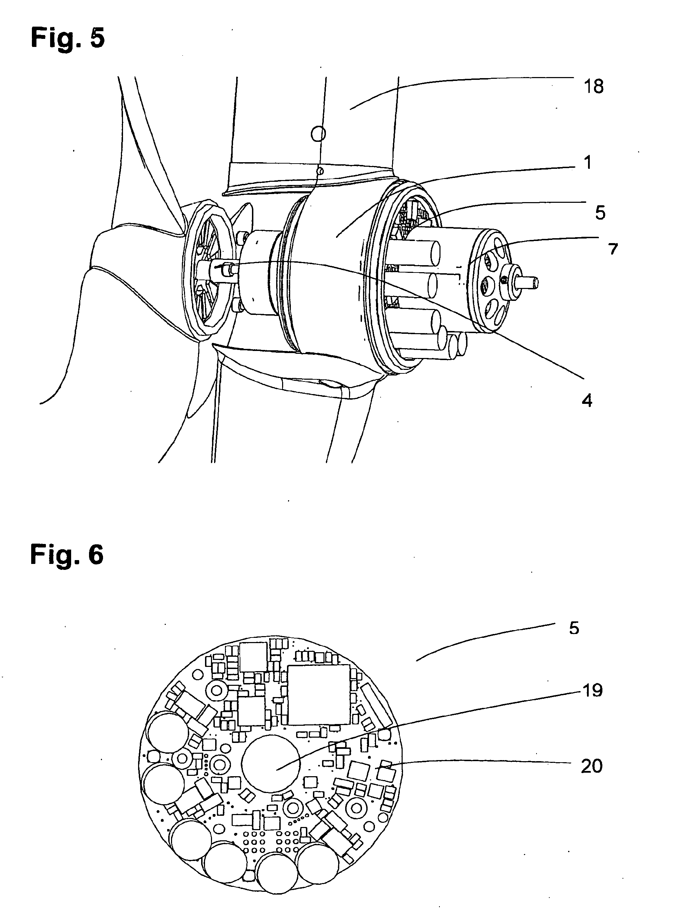

Figur 5 zeigt dieselbe Unterwassergondel ohne die beiden Gehäusedeckel 8, 11. Man erkennt die zentrale Antriebswelle 4, welche durch den Trägerkörper 1 geführt ist. Der Umrichter 5 grenzt direkt an den Trägerkörper 1 an. Der Umrichter 5 weist hierzu ebenfalls eine zentrale Bohrung 19 auf, durch die die Antriebswelle 4 verläuft. Auf der in Figur 6 nicht sichtbaren Rückseite der Leiterplatte 20 des Umrichters 5 sind mehrere elektronische Schaltelemente, wie beispielsweise Leistungstransistoren, angeordnet, durch die ein Großteil der im Betrieb des Umrichters 5 erzeugten Verlustwärme verursacht wird. Der Umrichter 5 wird auf die Welle 4 gesteckt und in thermischen Kontakt mit dem Trägerkörper 1 gebracht. Die die Verlustwärme erzeugenden Transistoren liegen vorzugsweise flächig auf dem Trägerkörper 1 auf. Gegebenenfalls kann zwischen den Umrichter 5 bzw. die auf diesem angebrachten elektronischen Bauteile und den Trägerkörper 1 eine wärmeleitende Paste oder eine Wärmeleitungsfolie gebracht werden.

In Figur 5 ist außerdem die Anordnung des Elektromotors 7 in der Unterwassergondel zu sehen. Der Elektromotor 7 ist in axialer Richtung gegen den Umrichter 5 und gegen den Trägerkörper 1 versetzt. Der Elektromotor 7 ist als Außenläufer ausgeführt, dessen Magnetfeld radial gerichtet ist. Der Umrichter 5 befindet sich damit außerhalb des Magnetfelds und wird durch dieses nicht gestört. Auch der metallische Trägerkörper 1 liegt außerhalb des Magnetfelds des Elektromotors 7, so dass keine bremsenden Wirbelströme in dem Trägerkörper 1 entstehen. Der Gehäusedeckel 8 befindet sich dagegen im Einflussbereich des Magnetfelds und besteht daher aus Kunststoff, um die Entstehung von Wirbelströme zu vermeiden. Vorzugsweise ist, insbesondere aus Gewichtsgründen, auch der Gehäusedeckel 11 aus Kunststoff gefertigt.

## Patentansprüche

1. Außenbordantrieb mit einer Unterwassergondel, welche einen gut wärmeleitenden Trägerkörper (1) umfasst, wobei der Trägerkörper (1) mit einer Öffnung (2) versehen ist, durch die eine Welle (4) verläuft, wobei die Welle (4) mit einem in der Unterwassergondel angeordneten Elektromotor (7) verbunden ist, wobei der Elektromotor (7) von einem Umrichter (5) elektronisch angesteuert wird, **dadurch gekennzeichnet, dass** der Umrichter (5) in der Unterwassergondel untergebracht ist, dass der Elektromotor (7) als Außenläufer ausgeführt ist und dass der Umrichter (5) in thermischem Kontakt mit dem Trägerkörper (1) steht, wobei der Umrichter (5) und der Elektromotor (7) auf verschiedenen Seiten des Trägerkörpers (1) angeordnet sind.

2. Außenbordantrieb nach Anspruch 1, **dadurch gekennzeichnet, dass** ein oder mehrere Gehäuseteile (8, 11) aus einem nichtmetallischen Stoff, insbesondere aus Kunststoff, vorgesehen sind, welche die Außenwände der Unterwassergondel bilden.

3. Außenbordantrieb nach einem der Ansprüche 1 oder 2, **dadurch gekennzeichnet, dass** in der Unterwassergondel ein Getriebe (9) vorgesehen ist.

4. Außenbordantrieb nach einem der Ansprüche 1 bis 3, **dadurch gekennzeichnet, dass** der Umrichter (5) eine Leiterplatte (20) aufweist, auf der elektronische Schaltelemente, insbesondere Transistoren, und weitere elektronische Bauelemente angeordnet sind, wobei die elektronischen Schaltelemente in thermischem Kontakt mit dem Trägerkörper (1) stehen.

5. Außenbordantrieb nach einem der Ansprüche 1 bis 4, **dadurch gekennzeichnet, dass** der Trägerkörper (1) aus Metall besteht.

6. Außenbordantrieb nach einem der Ansprüche 1 bis 5, **dadurch gekennzeichnet, dass** der Umrichter (5) auf einer Metallplatte angeordnet ist, welche in thermischem Kontakt mit dem Trägerkörper (1) steht.

## Claims

1. Outboard drive with an underwater gondola, which comprises a carrier body (1) with good thermal conductivity, wherein the carrier body (1) is provided with an opening (2), through which a shaft (4) passes, wherein the shaft (4) is connected to an electric motor (7) arranged in the underwater gondola, wherein the electric motor (7) is activated electronically by a converter (5), **characterized in that** the converter (5) is accommodated in the underwater gondola, **in that** the electric motor (7) is in the form of an external rotor, and **in that** the converter (5) is in thermal contact with the carrier body (1), wherein the converter (5) and the electric motor (7) are arranged on different sides of the carrier body (1).

2. Outboard drive according to Claim 1, **characterized in that** one or more housing parts (8, 11) consisting of a non-metallic material, in particular of plastics, are provided, which housing parts form the outer walls of the underwater gondola.

3. Outboard drive according to either of Claims 1 and 2, **characterized in that** a gear mechanism (9) is provided in the underwater gondola.

4. Outboard drive according to one of Claims 1 to 3, **characterized in that** the converter (5) has a printed circuit board (20), on which electronic switching elements, in particular transistors, and further electronic components are arranged, wherein the electronic switching elements are in thermal contact with the carrier body (1).

5. Outboard drive according to one of Claims 1 to 4, **characterized in that** the carrier body (1) consists of metal.

6. Outboard drive according to one of Claims 1 to 5, **characterized in that** the converter (5) is arranged on a metal plate, which is in thermal contact with the carrier body (1).

## Revendications

1. Entraînement de hors-bord comprenant une gondole immergée, qui comprend un corps porteur (1) bon conducteur thermique, le corps porteur (1) étant pourvu d'une ouverture (2) à travers laquelle s'étend un arbre (4), l'arbre (4) étant connecté à un moteur électrique (7) disposé dans la gondole immergée, le moteur électrique (7) étant commandé électroniquement par un convertisseur (5), **caractérisé en ce que** le convertisseur (5) est monté dans la gondole immergée, **en ce que** le moteur électrique (7) est réalisé sous forme de rotor extérieur et **en ce que** le convertisseur (5) est en contact thermique avec le corps porteur (1), le convertisseur (5) et le moteur électrique (7) étant disposés sur différents côtés du corps porteur (1).

2. Entraînement de hors-bord selon la revendication 1, **caractérisé en ce qu'**une ou plusieurs parties de boîtier (8, 11) en un matériau non métallique, notamment en plastique, sont prévues, lesquelles forment les parois extérieures de la gondole immergée.

3. Entraînement de hors-bord selon l'une quelconque des revendications 1 ou 2, **caractérisé en ce qu'**une boîte de vitesses (9) est prévue dans la gondole immergée.

4. Entraînement de hors-bord selon l'une quelconque des revendications 1 à 3, **caractérisé en ce que** le convertisseur (5) présente une carte à circuits imprimés (20) sur laquelle sont disposés des éléments de circuit, notamment des transistors, et d'autres composants électroniques, les éléments de circuit électroniques étant en contact thermique avec le corps porteur (1).

5. Entraînement de hors-bord selon l'une quelconque des revendications 1 à 4, **caractérisé en ce que** le corps porteur (1) se compose de métal.

6. Entraînement de hors-bord selon l'une quelconque des revendications 1 à 5, **caractérisé en ce que** le convertisseur (5) est disposé sur une plaque métallique qui est en contact thermique avec le corps porteur (1).
